# EUROPÄISCHE PATENTSCHRIFT

(11) **EP 3 330 145 B1**
(45) Veröffentlichungstag und Bekanntmachung des Hinweises auf die Patenterteilung: **09.06.2021**
(21) Anmeldenummer: 17201945.7
(22) Anmeldetag: 15.11.2017
(51) Int. Cl.: B60W 10/18, B60W 10/20, B60T 13/74

(54) **FLURFÖRDERZEUG MIT EINER BREMSSTEUERUNG**
INDUSTRIAL TRUCK WITH BRAKE CONTROL
CHARIOT DE MANUTENTION DOTÉ D'UNE COMMANDE DE FREINAGE

(30) Priorität: 30.11.2016 DE 102016123104
(43) Veröffentlichungstag der Anmeldung: 06.06.2018
(73) Patentinhaber: Jungheinrich Aktiengesellschaft, 22047 Hamburg (DE)
(72) Erfinder: Düwel, Matthias, 22850 Norderstedt (DE); Herschel, Jan, 23843 Bad Oldesloe (DE); Glaeske, Jens, 22844 Norderstedt (DE); Rosenberg, Tilman, 22303 Hamburg (DE); Schuchard, Michael, 24558 Henstedt-Ulzburg (DE); Bernitt, Rolf, 25474 Bönningstedt (DE)
(74) Vertreter: Hauck Patentanwaltspartnerschaft mbB

(56) Entgegenhaltungen:
- EP-A2- 1 985 576
- DE-A1- 10 100 743
- DE-A1- 10 258 931
- DE-A1-102008 011 719
- DE-B3- 10 250 764
- US-B1- 7 216 024

## Beschreibung

Die vorliegende Erfindung betrifft ein Flurförderzeug mit einer Bremssteuerung.

Aus DE 102 51 025 A1 ist eine Bremsvorrichtung für ein Flurförderzeug bekannt geworden, die einen hydraulischen Bremszylinder aufweist, der mit einem Betätigungsorgan gekoppelt und über eine Bremsleitung mit mindestens einer einem Rad des Flurförderzeugs zugeordneten hydraulischen Bremse verbunden ist. Mit der hydraulischen Bremse ist ein weiterer hydraulischer Bremszylinder verbunden, der mit einem Elektromagneten gekoppelt ist, wobei eine Notstoppvorrichtung vorgesehen ist, die ein Bremssignal auf den Elektromagneten zur Betätigung des zweiten Bremszylinders gibt.

Aus DE 10 2010 044 655 A1 ist ein Flurförderzeug mit einem elektrischen Fahrantrieb vorgesehen, das eine Steuerung aufweist, die den elektrischen Fahrantrieb in einem generatorischen Betrieb zum Abbremsen des Flurförderzeugs umschalten kann, wobei eine Wirbelstrombremse vorgesehen ist, die von der Steuerung während des generatorischen Betriebs zum Abbremsen des Flurförderzeugs angesteuert wird.

Bei Flurförderzeugen mit einem dreirädrigen Fahrwerk, von dem ein gelenktes Antriebsrad und zwei gelenkte Lasträder vorgesehen sind, ist es bekannt, sowohl das Antriebsrad als auch die Lasträder mit einer Bremse auszustatten. Die Lasträder werden über eine hydraulische Bremse gebremst.

Für ein solches Flurförderzeug ist als ein Fahrmodus eine sogenannte Querfahrt bekannt. Bei der Querfahrt bewegt sich das Flurförderzeug bezogen auf seine durch das Lasttragmittel vorgegebene Längsachse in Querrichtung. Hierzu wird sowohl das Antriebsrad als auch die Lasträder über ihre jeweilige Lenkung quer zur Fahrzeuglängsrichtung gestellt.

Aus DE 102 50 764 B3 ist ein Verfahren und eine Vorrichtung zur Lenkung eines Flurförderzeuges bekannt geworden. Das dreirädrige Fahrwerk besitzt hierbei eine Reihe von unterschiedlichen Fahrmodi.

Aus DE 10 2008 011 719 ist ein Flurförderzeug bekannt geworden, bei der auch die Notstopp-Bremse über einen PWM-Steller angesteuert wird.

Der Erfindung liegt die Aufgabe zugrunde, ein Flurförderzeug mit einer Bremssteuerung bereitzustellen, die eine spurtreue Fahrt des Fahrzeugs ermöglicht.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug besitzt ein Antriebsteil und ein Lastteil. Das Antriebsteil weist mindestens ein gelenktes Antriebsrad auf. Das Lastteil besitzt zwei nebeneinander verlaufende Radarme, die jeweils über ein endseitig angeordnetes Lastrad abgestützt sind. Bevorzugt befindet sich zwischen den Radarmen ein höhenverstellbares Lasttragmittel beispielsweise in Form eines Hub- oder Schubmast. Das erfindungsgemäße Flurförderzeug ist ferner mit mindestens einer Lenksteuerung ausgestattet, die das mindestens eine Antriebsrad und mindestens ein Lastrad oder beide Lasträder für eine Lenkung des Fahrzeugs ansteuert. Wenn im Kontext dieser Anmeldung von einer Lenksteuerung und von einer Ansteuerung der Lenkung gesprochen wird, so schließt dies stets die Regelung eines Ist-Werts der Lenkung auf einen vorgegebenen Lenksollwert mit ein. Das erfindungsgemäße Fahrzeug ist zusätzlich zu der Lenksteuerung mit einer Bremssteuerung ausgestattet, die das mindestens eine Antriebsrad und die Lasträder zu einer Bremsung ansteuert. Erfindungsgemäß ist dabei vorgesehen, dass die Bremssteuerung die Lasträder und das mindestens eine Antriebsrad mit jeweils einem Bremsmoment ansteuert, wenn das ein spurtreues Abbremsen erlaubt. Ferner bestimmt die Bremssteuerung das Bremsmoment für die Lasträder abhängig von dem Bremsmoment für das Antriebsrad und einem oder mehreren

Betriebsparametern aus einer Fahrzeugsteuerung. Bei einem Flurförderzeug mit lenkbaren Lasträdern kann die Situation auftreten, in der das Flurförderzeug quer zur Längsrichtung fährt, sogenannte Querfahrt. Bei der Querfahrt tritt die Situation auf, dass das querstehende Antriebsrad und die querstehenden Lasträder sich gemeinsam nach vorn bewegen. In einer solchen Situation sind erfindungsgemäß die Bremsmomente von Antriebsrad und Lastrad aufeinander abzustimmen. Dies trifft nicht nur auf eine Querfahrt unter ungefähr 90° zur Längsrichtung zu, sondern auch bereits bei einer Kurvenfahrt. Erfindungsgemäß wird die Bestimmung des Bremsmoments für die Lasträder abhängig vom Bremsmoment für das Antriebsrad bestimmt. Hierdurch wird ein gieren des Fahrzeugs um eine Vertikalachse verhindert. Das spurtreue Abbremsen wird bestimmt, indem das Bremsmoment für die Lasträder entsprechend angepasst ist. Erfindungsgemäß wird bei der Abstimmung der Bremsmomente zwischen Antriebsrad und den Lasträdern ein oder mehrere Betriebsparameter aus der Fahrzeugsteuerung mit berücksichtigt. Diesem Ansatz liegt die Erkenntnis zugrunde, dass erst eine betriebsparameterabhängige Bremsung von Lasträdern und dem mindestens einem Antriebsrad ein spurtreues Bremsen ermöglichen.

In einer bevorzugten Ausgestaltung des Flurförderzeugs weisen die Bremseinheiten der Lasträder eine elektrische Bremse auf. Im Gegensatz zu einer hydraulischen Bremse der Lasträder hat eine elektrische Bremse den Vorteil, dass diese deutlich service- und montagefreundlicher ist. Zudem kann eine Wartung der Bremsflüssigkeit entfallen.

In einer weiteren bevorzugten Ausgestaltung ist mindestens eine den Bremseinheiten der Lasträder zugeordnete Notspannungsquelle vorgesehen, die eine Betätigung der Bremseinheiten auch beim Ausfall einer Versorgungsspannung an Bord zulassen. Die Notspannungsquelle dient dazu, die Bremseinheiten der Lasträder auch bei einem Spannungsausfall noch kontrolliert betätigen zu können. Insbesondere ist die mindestens eine Notspannungsquelle derart ausgelegt, dass im Falle eines Notstopps die Bremssteuerung und die Bremssteuereinheiten der Lasträder mit elektrischer Leistung versorgt werden können. Bevorzugt kann auch die Bremseinheit des mindestens einen Antriebsrads mit elektrischer Leistung für einen kontrollierten Bremsvorgang versorgt werden. Im Falle eines Notstopps, wird über ein Notausschütz in der Regel die gesamte Spannungsversorgung an Bord des Flurförderzeugs unterbunden. Bei einer elektrischen Bremse für die Lasträder, stellt die Notspannungsquelle sicher, dass diese gesteuert abgebremst werden können.

Bevorzugt ist die Notspannungsquelle als eine Batterie und/oder ein Kondensator ausgeführt. Die Notspannungsquelle muss dabei nicht unbedingt zusammen mit der Hauptspannungsquelle des Flurförderzeugs angeordnet sein, sondern kann auch in den Lastarmen in räumlicher Nähe zu den Lasträdern angeordnet sein.

In einer bevorzugten Ausgestaltung weisen die Bremseinheiten der Lasträder jeweils eine elektromagnetische Scheibenbremse auf. Für die Bremseinheit für das mindestens eine Antriebsrad kann bevorzugt eine magnetische Federkraftbremse vorgesehen sein.

In einer besonders bevorzugten Ausgestaltung bestimmt die Bremssteuerung bei einem eine Querfahrt anzeigenden Betriebsparameter das Bremsmoment für die Lasträder derart in Abhängigkeit von dem Bremsmoment des Antriebsrades, dass keine Drehung um eine vertikale Achse erfolgt. Bei der Querfahrt bewegen sich das mindestens eine Antriebsrad und eines der Lasträder in Fahrtrichtung vorweg. Bei einem Abbremsen, insbesondere bei einem Notstopp ist es daher erforderlich, dass beide Räder eine im Wesentlichen gleiche Verzögerung für das Flurförderzeug ausüben. Eine ungleichmäßige Verzögerung an dem Flurförderzeug würde dann zu einem Abweichen aus der Spur, insbesondere zu einer Gierbewegung führen. In dieser Ausgestaltung dient die Querfahrt als ein Betriebsparameter, der für die Bestimmung des Bremsmoments für die Lasträder herangezogen wird. Der Begriff Querfahrt ist in diesem Kontext nicht nur als eine Fahrt in einem 90°-Winkel zur Fahrzeuglängsrichtung zu verstehen, sondern schließt alle Fahrtrichtungen quer zur Fahrzeuglängsrichtung, also abweichend von der Geradeausfahrt mit ein, bei denen die Lasträder gelenkt die quer zur Fahrzeuglängsrichtung stehen.

In einer weiteren bevorzugten Ausgestaltung bestimmt die Bremssteuerung bei einem eine Querfahrt anzeigenden Betriebsparameter das Bremsmoment für die Lasträder derart in Abhängigkeit von dem Bremsmoment des Antriebsrades und einem oder mehreren Betriebsparametern, das kein Gieren um eine vertikale Achse erfolgt. Hierbei können als Betriebsparameter eine aufgenommene Last, eine Hubhöhe, eine Fahrgeschwindigkeit, ein Lenkwinkel, eine Stellung des Lastteils, beispielsweise eines Hubgerüsts, eine Mastneigung und eine aufgetretene Fahrzeugneigung, beispielsweise durch eine Rampe, mit in die Bestimmung des Bremsmoments für die Lasträder eingehen.

In einer bevorzugten Ausgestaltung weist das Lastteil einen Schubmast auf, dessen Position als Betriebsparameter von der Bremssteuerung bei der Bestimmung des Bremsmoments für die Lasträder berücksichtigt wird. Insbesondere bei der Querfahrt erfolgt durch die Position des Schubmastes mit oder ohne aufgenommener Last eine ganz wesentliche Lastverschiebung des Flurförderzeugs und der auf das Antriebsrad und die Lasträder wirkenden Kräfte. Für ein spurtreues Abbremsen müssen die Bremsmomente der Lasträder entsprechend angepasst werden.

Bei dem erfindungsgemäßen Flurförderzeug ist ein manuell betätigbarer Bremssignalgeber vorgesehen, der das Bremsmoment für das mindestens eine Antriebsrad vorgibt. Das Signal des Bremssignalgebers liegt als Sollsignal an der Bremssteuerung an.

In einer bevorzugten Weiterbildung kann die Bremssteuerung das Bremsmoment auch abhängig von einem oder mehreren Konfigurationsparametern des Fahrzeugs bestimmen. Konfigurationsparameter bestimmen wie ein Fahrzeugtyp genau konfiguriert ist. Konfigurationsparameter betreffen beispielsweise Abmessungen und/oder Gewichte von Last- und Antriebsteil sowie Kenngrößen zu dem Antriebsrad und/oder den Lasträdem. Kenngrößen für die Räder können hierbei Durchmesser und beispielsweise gewisse Reibungskoeffizienten sein. Die Abmessungen und/oder Gewichte von Last- und Antriebsteil umfassen nicht nur das Fahrzeugleergewicht und seine entsprechenden Abmessungen, sondern auch Abmessungen wie maximale Hubhöhe, maximales Traggewicht und dergleichen. In dem in der Weiterbildung die Bremssteuerung ihre Aufgabe abhängig von Konfigurationsparametern ausführt, kann für unterschiedlich konfigurierte Fahrzeuge auf dieselbe Bremssteuerung in Form einer hardwaremäßig vorgesehenen Steuereinheit oder in Form eines Softwareprogramms für eine Steuerung zurückgegriffen werden. Durch Vorgabe der Konfigurationsparameter wählt die Bremssteuerung dann das richtige Bestimmungsverfahren für das Bremsmoment.

Bei dem erfindungsgemäßen Flurförderzeug ist vorgesehen, dass bei einem Notstopp an dem mindestens einen Antriebsrad ein vorbestimmtes Bremsmoment anliegt, das von der Bremssteuerung auch zur Bestimmung des Bremsmoments für die Lasträder herangezogen wird. Das vorbestimmte Bremsmoment an dem Antriebsrad im Falle eines Notstopps kann als vorbestimmtes Bremsmoment in der Bremssteuerung abgelegt sein oder als aktueller Istwert des Bremsmoments am Fahrzeug gemessen werden.

Neben dem Messen des Bremsmoments an dem mindestens einen Antriebsrad ist auch ein Messen des Bremsmoments an mindestens einem der Lasträder möglich, wobei dann bevorzugt die Bremssteuerung auf einen vorgegebenen Sollwert für das Bremsmoment regelt.

In einer weiteren bevorzugten Ausgestaltung ist die Bremssteuerung dazu ausgebildet, auch ohne einen Bremsmoment für die mindestens eine Antriebseinheit ein stabilisierendes Bremsmoment für die Lasträder zu erzeugen. Insbesondere bei einer Kurven- oder Querfahrt können durch das stabilisierende Bremsmoment der Lasträder Spurabweichungen vermieden werden. Gerade mit aufgenommener Last entstehen bei der Kurvenfahrt große nach außen treibende Kräfte, die zu Spurabweichungen an dem Fahrzeug führen können. Diesen Spurabweichungen kann entgegengewirkt werden, indem ein zusätzliches unterstützendes Bremsmoment für die Lasträder erzeugt wird.

Eine bevorzugte Ausgestaltung eines erfindungsgemäßen Flurförderzeugs wird anhand der Figuren näher erläutert. Es zeigen
- Fig. 1: einen Schubmaststapler in einer perspektivischen Ansicht auf das Antriebsteil und
- Fig. 2: eine schematische Ansicht des dreirädrigen Fahrwerks.

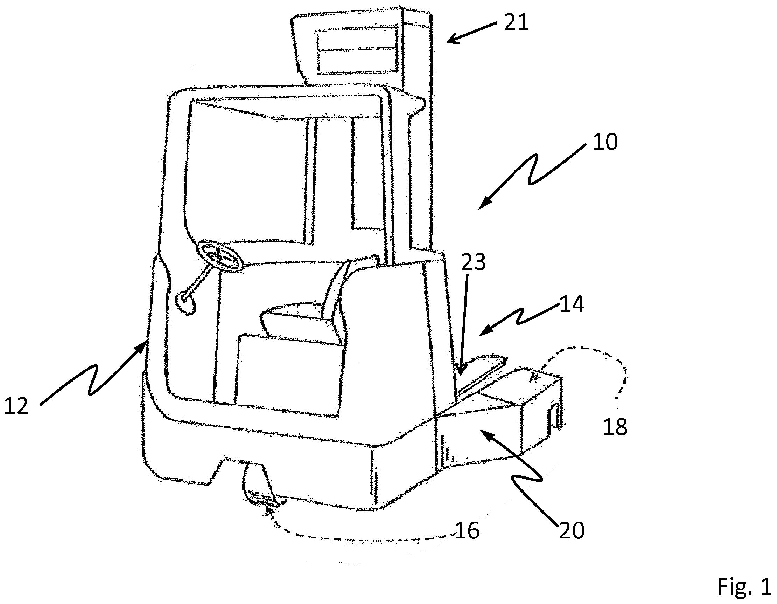

Fig. 1 zeigt in einer schematischen Ansicht einen Schubmaststapler 10, der ein Antriebsteil 12 und ein Lastteil 14 aufweist. Das Flurförderzeug 10 besitzt ein dreirädriges Fahrwerk, wobei ein Antriebsrad 16 am Antriebsteil 12 angeordnet ist. Zwei Lasträder 18 sind am Ende der Radarme 20 angeordnet. Zwischen den Radarmen 20 befindet sich ein Schubmast 21, der ein Lasttragmittel 23 anheben kann.

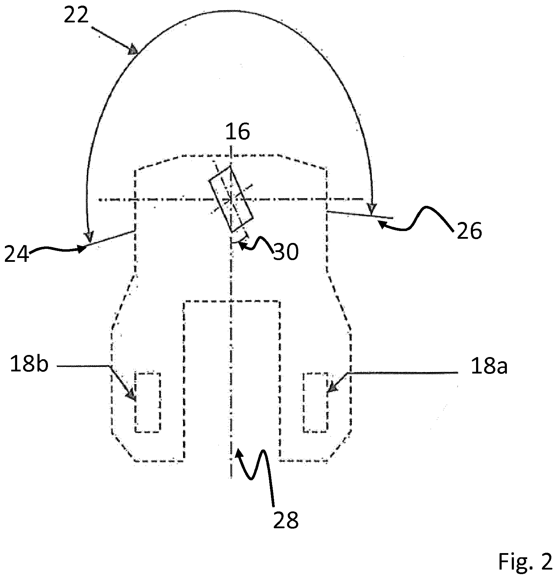

Fig. 2 zeigt das dreirädrige Fahrwerk in einer schematischen Ansicht. Hier sind die Lasträder 18A, 18B jeweils lenkbar und können für eine bessere Wendigkeit des Fahrzeugs ebenfalls über die aktive Lenksteuerung verstellt werden. Das Antriebsrad 16 ist in dem dargestellten Ausführungsbeispiel zwischen einem linken Anschlag 24 und einem rechten Anschlag 26 über einen Winkelbereich 22 verfahrbar. Das Antriebsrad 26 stellt den Antrieb des gesamten Fahrzeugs sicher.

Bei einem solchen dreirädrigen Fahrwerk gibt es verschiedene Modi in denen das Fahrzeug gelenkt werden kann. In einem Lenkmodus liegt eine sogenannte Querfahrt vor, bei der alle Räder relativ zu der Fahrzeuglängsachse 28 ausgelenkt sind. Dies bedeutet, dass anders als in der Fig. 2 dargestellt auch die Lasträder 18A und 18B eine von der Fahrzeuglängsrichtung 28 abweichende Stellung haben. Dies kann beispielsweise ebenfalls der Lenkwinkel 30 sein, den das Antriebsrad 16 in Fig. 2 besitzt. Das Antriebsrad 16 ist über den Lenkwinkelbereich 22 zwischen einem Lenkwinkelanschlag 24 und einem Lenkwinkelanschlag 26 verstellbar.

Bei dem erfindungsgemäßen Flurförderzeug ist sichergestellt, dass bei einer Querfahrt und auch bei einer Kurvenfahrt eine sichere Abbremsung ohne eine Gierbewegung um eine vertikale Achse im Antriebsteil oder das Antriebsrad erfolgt. Durch die ungleichmäßige Lastverteilung an dem Flurförderzeug bei einer Querfahrt bezogen auf die Fahrtrichtung, ermöglicht die Anpassung der Bremsmomente eine gleichmäßige Verzögerung an dem Fahrzeug.

Weiterhin ist an dem erfindungsgemäßen Fahrzeug besonders vorteilhaft, dass in einem Notstoppbetrieb die elektrischen Bremsen an den Lasträdern noch angesteuert werden können, da hierzu eine Notfallspannungsquelle vorgesehen ist. Auch bei einem normalen Fahrbetrieb wie beispielsweise einer Kurvenfahrt oder einer Querfahrt kann die Bahnstabilität und damit die Spurtreue des Flurförderzeugs unterstützt werden, indem die Bremsen der Lasträder einzeln oder gemeinsam und unabhängig von der Bremse des Antriebsrades angesteuert werden.

### Bezugszeichenliste

- 10: Schubmaststapler
- 12: Antrieb steil
- 14: Lastteil
- 16: Antriebsrad
- 18: Lasträder
- 18A: Lastrad
- 18B: Lastrad
- 20: Radarme
- 21: Schubmast
- 22: Lenkwinkelbereich
- 23: Lasttragmittel
- 24: linker Anschlag
- 26: rechter Anschlag
- 28: Fahrzeuglängsachse
- 30: Lenkwinkel

## Patentansprüche

1. Flurförderzeug (10) mit einem Antriebsteil (12), das mindestens ein gelenktes Antriebsrad (16) aufweist, einem Lastteil (14), das zwei nebeneinander verlaufende Radarme (20) besitzt, die jeweils über ein endseitig angeordnetes Lastrad (18) abgestützt sind, und mit mindestens einer Lenksteuerung, die das mindestens eine Antriebsrad (16) und ein oder mehrere Lasträder (18) für eine Lenkung des Fahrzeugs ansteuert, wobei eine Bremssteuerung vorgesehen ist, die das mindestens eine Antriebsrad (16) und die Lasträder (18) zu einer Bremsung ansteuert, **dadurch gekennzeichnet, dass**
- die Bremssteuerung die Lasträder (18) und das mindestens eine Antriebsrad (16) mit jeweils einem Bremsmoment ansteuert, das ein spurtreues Abbremsen erlaubt, und
- die Bremssteuerung das Bremsmoment für die Lasträder (18) abhängig von den folgenden Größen bestimmt:
• dem Bremsmoment für das mindestens eine Antriebsrad (16) und
• einem oder mehreren Betriebsparametern aus einer Fahrzeugsteuerung.

2. Flurförderzeug (10) nach Anspruch 1, **dadurch gekennzeichnet, dass** die Bremseinheiten der Lasträder (18) eine elektrische Bremse aufweisen.

3. Flurförderzeug (10) nach Anspruch 2, **dadurch gekennzeichnet, dass** den Bremseinheiten der Lasträder (18) mindestens eine Notspannungsquelle zugeordnet ist, die eine Betätigung der Bremseinheiten auch bei einem Ausfall einer Spannungsversorgung an Bord zulassen.

4. Flurförderzeug (10) nach Anspruch 3, **dadurch gekennzeichnet, dass** die mindestens eine Notspannungsquelle derart ausgelegt ist, dass im Falle eines Notstopps die Bremssteuerung und die Bremseinheiten der Lasträder (18) mit elektrischer Leistung versorgt werden kann.

5. Flurförderzeug (10) nach Anspruch 3 oder 4, **dadurch gekennzeichnet, dass** die mindestens eine Notspannungsquelle eine Batterie und/oder einen Kondensator aufweist.

6. Flurförderzeug (10) nach einem der Ansprüche 1 bis 5, **dadurch gekennzeichnet, dass** die Bremseinheiten der Lasträder (18) jeweils eine elektromagnetische Scheibenbremse aufweisen.

7. Flurförderzeug (10) nach einem der Ansprüche 1 bis 6, **dadurch gekennzeichnet, dass** die Bremseinheit für das mindestens eine Antriebsrad (16) eine magnetische Federkraftbremse aufweist.

8. Flurförderzeug (10) nach einem der Ansprüche 1 bis 7, **dadurch gekennzeichnet, dass** die Bremssteuerung bei einem eine Querfahrt anzeigenden Betriebsparameter, das Bremsmoment für die Lasträder (18) derart in Abhängigkeit von dem Bremsmoment des Antriebrades (16) bestimmt, dass keine Drehung um eine vertikale Achse erfolgt.

9. Flurförderzeug (10) nach einem der Ansprüche 1 bis 8, **dadurch gekennzeichnet, dass** die Bremssteuerung bei einem eine Querfahrt anzeigenden Betriebsparameter das Bremsmoment für die Lasträder (18) derart in Abhängigkeit von dem Bremsmoment des Antriebsrades (16) und einem oder mehreren Betriebsparametern bestimmt, dass keine Drehung um eine vertikale Achse erfolgt, wobei der oder die Betriebsparameter aus folgenden Parametern ausgewählt sind: eine aufgenommene Last, eine Hubhöhe, eine Fahrgeschwindigkeit, ein Lenkwinkel (30), eine Stellung des Lastteils (14) und eine Fahrzeugneigung.

10. Flurförderzeug (10) nach einem der Ansprüche 1 bis 9, **dadurch gekennzeichnet, dass** das Lastteil (14) einen Schubmast (21) aufweist, dessen Position als Betriebsparameter bei der Bestimmung des Bremsmoments für die Lasträder (18) durch die Bremssteuerung mit eingeht.

11. Flurförderzeug (10) nach einem der Ansprüche 1 bis 10, **dadurch gekennzeichnet, dass** das Bremsmoment für das mindestens eine Antriebsrad (16) durch einen manuell betätigbaren Bremssignalgeber an die Bremssteuerung angelegt wird.

12. Flurförderzeug (10) nach einem der Ansprüche 1 bis 11, **dadurch gekennzeichnet, dass** die Bremsteuerung das Bremsmoment abhängig von einem oder mehreren Konfigurationsparametern des Fahrzeugs bestimmt, wobei Konfigurationsparameter des Fahrzeugs Abmessungen und/oder Gewichte von Last- und Antriebsteil (12, 14) und Kenngrößen zu dem Antriebsrad (16) und/oder den Lasträdern (18) aufweisen.

13. Flurförderzeug (10) nach einem der Ansprüche 1 bis 12, **dadurch gekennzeichnet, dass** bei einem Notstopp an dem mindestens einen Antriebsrad (16) ein Bremsmoment anliegt, das von der Bremssteuerung auch zur Bestimmung des Bremsmoments für die Lasträder (18) herangezogen wird.

14. Flurförderzeug (10) nach einem der Ansprüche 1 bis 13, **dadurch gekennzeichnet, dass** eine erste Messeinrichtung für ein Bremsmoment an dem mindestens einen Antriebsrad (16) vorgesehen ist und die Bremssteuerung ausgebildet ist, um das gemessene Bremsmoment zur Bestimmung des Bremsmoments für das mindestens eine Antriebsrad heranzuziehen.

15. Flurförderzeug nach einem der Ansprüche 1 bis 14, **dadurch gekennzeichnet, dass** eine zweite Messeinrichtung für ein Bremsmoment an mindestens einem der Lasträder (18) vorgesehen ist und die Bremssteuerung ausgebildet ist, um das gemessene Bremsmoment auf einen vorgegebenen Sollwert für das Bremsmoment zu regeln.

16. Flurförderzeug nach einem der Ansprüche 1 bis 14, **dadurch gekennzeichnet, dass** bei einer Quer- oder Kurvenfahrt die Bremssteuerung ohne ein Bremsmoment für das mindestens eine Antriebsrad (16) eine stabilisierendes Bremsmoment für die Lasträder (18) erzeugt, um Abweichungen von einer spurtreuen Fahrt entgegen zu wirken.

## Claims

1. An industrial truck (10) having a drive portion (12) which comprises at least one steered drive wheel (16), a load portion (14) which comprises two wheel arms (20) that extend one next to the other and that are each supported by means of a load wheel (18) arranged on the ends, and at least one steering control system which controls the at least one drive wheel (16) and one or more load wheels (18) in order to steer the vehicle, wherein a brake control system is provided, which controls the at least one drive wheel (16) and the load wheels (18) in order to produce braking, **characterized in that**
- the brake control system controls the load wheels (18) and the at least one drive wheel (16) by means of one braking torque in each case, which braking torque allows for directionally stable braking,
and
- the brake control system determines the braking torque for the load wheels (18) depending on the following variables:
• the braking torque for the at least one drive wheel (16) and
• one or more operating parameters from a vehicle control system.

2. The industrial truck (10) according to claim 1, **characterized in that** the brake units of the load wheels (18) comprise an electric brake.

3. The industrial truck (10) according to claim 2, **characterized in that** the brake units of the load wheels (18) are assigned at least one emergency voltage source, which allows actuation of the brake units even in the event of failure of an on-board voltage supply.

4. The industrial truck (10) according to claim 3, **characterized in that** the at least one emergency voltage source is designed such that the brake control system and the brake units of the load wheels (18) can be provided with electrical power in the event of an emergency stop.

5. The industrial truck (10) according to claim 3 or 4, **characterized in that** the at least one emergency voltage source comprises a battery and/or a capacitor.

6. The industrial truck (10) according to any one of claims 1 to 5, **characterized in that** the brake units of the load wheels (18) each comprise an electromagnetic disk brake.

7. The industrial truck (10) according to any one of claims 1 to 6, **characterized in that** the brake unit comprises a magnetic spring-loaded brake for the at least one drive wheel (16).

8. The industrial truck (10) according to any one of claims 1 to 7, **characterized in that** the brake control system, in the case of an operating parameter indicating sideways travel, determines the braking torque for the load wheels (18) depending on the braking torque of the drive wheel (16) such that no rotation occurs about a vertical axis.

9. The industrial truck (10) according to any one of claims 1 to 8, **characterized in that** the brake control system, in the case of an operating parameter indicating sideways travel, determines the braking torque for the load wheels (18) depending on the braking torque of the drive wheel (16) and one or more operating parameters such that no rotation occurs about a vertical axis, wherein the operating parameter or parameters are selected from the following parameters: a load received, a lift height, a travel speed, a steering angle (30), a position of the load portion (14) and a vehicle inclination.

10. The industrial truck (10) according to any one of claims 1 to 9, **characterized in that** the load portion (14) comprises a retractable mast (21), the position of which is included as an operating parameter when the brake control system determines the braking torque for the load wheels (18).

11. The industrial truck (10) according to any one of claims 1 to 10, **characterized in that** the braking torque for the at least one drive wheel (16) is applied to the brake control system by means of a manually actuable brake signal generator.

12. The industrial truck (10) according to any one of claims 1 to 11, **characterized in that** the brake control system determines the braking torque depending on one or more configuration parameters of the vehicle, wherein configuration parameters of the vehicle comprise dimensions and/or weights of the load and drive portion (12, 14) and characteristic variables of the drive wheel (16) and/or load wheels (18).

13. The industrial truck (10) according to any one of claims 1 to 12, **characterized in that**, in the event of an emergency stop, a braking torque is applied to the at least one drive wheel (16), which braking torque is used by the brake control system to also determine the braking torque for the load wheels (18).

14. The industrial truck (10) according to any one of claims 1 to 13, **characterized in that** a first measuring apparatus is provided for a braking torque on the at least one drive wheel (16) and the brake control system is designed to use the measured braking torque to determine the braking torque for the at least one drive wheel.

15. The industrial truck according to any one of claims 1 to 14, **characterized in that** a second measuring apparatus is provided for a braking torque on at least one of the load wheels (18) and the brake control system is designed to regulate the measured braking torque to a predefined target value for the braking torque.

16. The industrial truck according to any one of claims 1 to 14, **characterized in that**, in the event of sideways travel or travel around a bend, the brake control system generates a stabilizing braking torque for the load wheels (18), without a braking torque for the at least one drive wheel (16), in order to counteract deviations from directionally stable travel.

## Revendications

1. Chariot de manutention (10) comprenant une partie d'entraînement (12) présentant au moins une roue d'entraînement directrice (16), une partie de charge (14) possédant deux bras de roue (20) s'étendant l'un à côté de l'autre, lesquels sont supportés respectivement par le biais d'une roue de charge (18) disposée côté extrémité, et comprenant au moins une commande de direction actionnant l'au moins une roue d'entraînement (16) et une ou plusieurs roues de charge (18) pour une direction du véhicule, dans lequel il est prévu une commande de freinage actionnant le freinage de l'au moins une roue d'entraînement (16) et des roues de charge (18), **caractérisé en ce que**
- la commande de freinage actionne les roues de charge (18) et l'au moins une roue d'entraînement (16) respectivement avec un couple de freinage permettant un freinage avec bonne tenue de route, et
- la commande de freinage détermine le couple de freinage pour les roues de charge (18) en fonction des grandeurs suivantes :
• le couple de freinage pour l'au moins une roue d'entraînement (16) et
• un ou plusieurs paramètres de fonctionnement issus d'une commande de véhicule.

2. Chariot de manutention (10) selon la revendication 1, **caractérisé en ce que** les unités de freinage des roues de charge (18) présentent un frein électrique.

3. Chariot de manutention (10) selon la revendication 2, **caractérisé en ce qu'**au moins une source de tension de secours est attribuée aux unités de freinage des roues de charge (18), permettant une activation des unités de freinage même en cas de panne d'une alimentation en tension à bord.

4. Chariot de manutention (10) selon la revendication 3, **caractérisé en ce que** l'au moins une source de tension de secours est conçue de telle façon qu'en cas d'arrêt d'urgence, la commande de freinage et les unités de freinage des roues de charge (18) peuvent être alimentées avec une puissance électrique.

5. Chariot de manutention (10) selon la revendication 3 ou 4, **caractérisé en ce que** l'au moins une source de tension de secours présente une batterie et/ou un condensateur.

6. Chariot de manutention (10) selon l'une des revendications 1 à 5, **caractérisé en ce que** les unités de freinage des roues de charge (18) présentent respectivement un frein à disque électromagnétique.

7. Chariot de manutention (10) selon l'une des revendications 1 à 6, **caractérisé en ce que** l'unité de freinage pour l'au moins une roue d'entraînement (16) présente un frein à ressort magnétique.

8. Chariot de manutention (10) selon l'une des revendications 1 à 7, **caractérisé en ce qu'**avec un paramètre de fonctionnement indiquant un déplacement transversal, la commande de freinage détermine le couple de freinage pour les roues de charge (18) en fonction du couple de freinage de la roue d'entraînement (16) de telle façon qu'aucune rotation n'a lieu autour d'un axe vertical.

9. Chariot de manutention (10) selon l'une des revendications 1 à 8, **caractérisé en ce qu'**avec un paramètre de fonctionnement indiquant un déplacement transversal, la commande de freinage détermine le couple de freinage pour les roues de charge (18) en fonction du couple de freinage de la roue d'entraînement (16) et d'un ou plusieurs paramètres de fonctionnement, de telle façon qu'aucune rotation n'a lieu autour d'un axe vertical, dans lequel le ou les paramètres de fonctionnement sont sélectionnés parmi les paramètres suivants :
une charge reçue, une hauteur de course, une vitesse de déplacement, un angle de direction (30), une position de la partie de charge (14) et une inclinaison de véhicule.

10. Chariot de manutention (10) selon l'une des revendications 1 à 9, **caractérisé en ce que** la partie de charge (14) présente un mât de poussée (21), dont la position est utilisée comme paramètre de fonctionnement dans la détermination du couple de freinage pour les roues de charge (18) par la commande de freinage.

11. Chariot de manutention (10) selon l'une des revendications 1 à 10, **caractérisé en ce que** le couple de freinage pour l'au moins une roue d'entraînement (16) est appliqué à la commande de freinage par un générateur de signal de freinage activable manuellement.

12. Chariot de manutention (10) selon l'une des revendications 1 à 11, **caractérisé en ce que** la commande de freinage détermine le couple de freinage en fonction d'un ou de plusieurs paramètres de fonctionnement du véhicule, dans lequel des paramètres de configuration du véhicule présentent des dimensions et/ou des poids des parties de charge et d'entraînement (12, 14) et des grandeurs caractéristiques relatives à la roue d'entraînement (16) et/ou aux roues de charge (18).

13. Chariot de manutention (10) selon l'une des revendications 1 à 12, **caractérisé en ce que** lors d'un arrêt d'urgence sur l'au moins une roue d'entraînement (16), un couple de freinage est appliqué, lequel est également utilisé pour la détermination du couple de freinage pour les roues de charge (18) par la commande de freinage.

14. Chariot de manutention (10) selon l'une des revendications 1 à 13, **caractérisé en ce qu'**un premier dispositif de mesure est prévu pour un couple de freinage sur l'au moins une roue d'entraînement (16), et la commande de freinage est conçue pour utiliser le couple de freinage mesuré pour déterminer le couple de freinage pour l'au moins une roue d'entraînement.

15. Chariot de manutention selon l'une des revendications 1 à 14, **caractérisé en ce qu'**il est prévu un deuxième dispositif de mesure pour un couple de freinage sur l'une au moins des roues de charge (18), et la commande de freinage est conçue pour régler le couple de freinage mesuré sur une valeur de consigne prédéfinie pour le couple de freinage.

16. Chariot de manutention selon l'une des revendications 1 à 14, **caractérisé en ce que** lors d'un déplacement transversal ou dans un virage, la commande de freinage produit un couple de freinage stabilisant pour les roues de charge (18) sans couple de freinage pour l'au moins une roue d'entraînement (16), afin de compenser des écarts par rapport à un déplacement avec bonne tenue de route.
